Europäisches Patentamt

European Patent Office

Office européen des brevets

(19)

(11) Numéro de publication: **0 083 125
B1**

(12) **FASCICULE DE BREVET EUROPEEN**

(45) Date de publication du fascicule du brevet:
12.03.86

(51) Int. Cl.⁴: **C 01 D 3/26**

(21) Numéro de dépôt: **82201584.8**

(22) Date de dépôt: **13.12.82**

(54) **CONDITIONNEMENT DE SEL ALIMENTAIRE.**

(30) Priorité: **23.12.81 FR 8124261**

(43) Date de publication de la demande:
**06.07.83 Bulletin 83/27**

(45) Mention de la délivrance du brevet:
**12.03.86 Bulletin 86/11**

(84) Etats contractants désignés:
**AT BE CH DE FR GB IT LI LU NL SE**

(56) Documents cités:
**EP - A - 0 035 695
US - A - 1 362 087
US - A - 3 490 744
US - A - 3 527 560**

**Kirk Othmer, Vol. 21, pages 208-215**

(73) Titulaire: **SOLVAY & Cie (Société Anonyme), Rue du
Prince Albert, 33, B-1050 Bruxelles (BE)**

(72) Inventeur: **Desavelle, Pierre, Boulevard Suchet 69-75,
F-75016 Paris (FR)**

## Description

La présente invention a pour objet un conditionnement de sel alimentaire comprenant une enceinte fermée, étanche à l'air et à l'humidité, contenant le sel à l'état de particules.

On sait que la nature hygroscopique du sel alimentaire se trouvant sous forme de particules de chlorure de sodium tend à provoquer sa prise en masse pendant sa manutention ou son stockage (Dale W. Kaufmann «Sodium Chloride», 1960, Reinhold Publishing Corp., New York, pages 528 et 529). Toutes autres conditions étant égales, cette tendance est d'autant plus marquée que la granulométrie des particules est fine et elle est particulièrement rapide dans le cas de particules dont le diamètre est inférieur à 100 µm.

La prise en masse des particules de chlorure de sodium rend le produit inutilisable de sorte que son conditionnement, son transport et sa conversation doivent se faire dans des conditions très strictes, dont la réalisation est particulièrement difficile et onéreuse.

Par ailleurs, l'industrie alimentaire requiert de plus en plus souvent du sel raffiné sous la forme de particules de grande finesse et de qualité régulière, répondant aux exigences qu'impliquent les techniques de salaison mises en oeuvre actuellement et la nature des produits finis. Ces exigences sont particulièrement sévères pour le sel destiné au salage du beurre, dont le diamètre des particules ne peut généralement pas excéder 80 µm, voire 50 µm.

Pour lutter contre la prise en masse des particules de sel de qualité alimentaire, il est de pratique courante de mettre en oeuvre une substance antiagglutinante, telle que, par exemple, du carbonate de calcium ou de magnésium, du silicate de calcium ou, plus généralement, du ferrocyanure de potassium.

Toutefois, les exigences liées à la nécessité de disposer de sel raffiné de grande pureté dans l'industrie alimentaire imposent en général une limite maximum très faible à la quantité de substance antiagglutinante qui lui est ajoutée, celle-ci étant d'habitude d'à peine quelques parties par million dans le cas du ferrocyanure de potassium.

Dans le cas de particules de grande finesse, par exemple des particules de moins de 100 µm, la teneur tolérée en substance antiagglutinante s'avère généralement insuffisante pour garantir une conservation prolongée sans prise en masse.

L'invention vise par conséquent à fournir un conditionnement de sel alimentaire à l'état de particules pouvant être de grande finesse, facile à transporter, conserver et utiliser et ne présentant pas le danger d'une prise en masse des particules de sel ou d'une altération de leurs propriétés.

A cet effet, l'invention concerne un conditionnement de sel alimentaire comprenant une enceinte fermée, étanche à l'air et à l'humidité, contenant le sel à l'état de particules; selon l'invention, lesdites particules sont dispersées dans un liquide saturé en chlorure de sodium.

Le liquide mis en oeuvre dans le conditionnement selon l'invention doit être choisi parmi ceux qui ne réagissent pas avec les particules de sel et qui ne risquent pas de le contaminer par des matières incompatibles avec l'application à laquelle le sel est destiné. Il peut par exemple, être un alcool mais il est, de préférence, de l'eau.

La quantité minimum de liquide à mettre en oeuvre est celle qui est strictement nécessaire pour former un film liquide sur les particules et occuper le volume total des vides dans un empilage compact des particules. Elle dépend notamment de la distribution granulométrique des particules et de la tension superficielle du liquide mis en oeuvre et elle peut par conséquent être déterminée dans chaque cas particulier, par un travail de routine au laboratoire.

En pratique, on utilise une quantité de liquide supérieure à la quantité minimum précitée, et suffisante pour permettre une dispersion aisée des particules au moyen d'un malaxage mécanique.

En principe, il n'y a pas de limite à la quantité maximum de liquide à mettre en oeuvre.

En pratique toutefois, pour des raisons économiques, on n'a pas intérêt à utiliser une quantité exagérée de liquide, car le conditionnement résultant présenterait un volume excessif et il s'ensuivrait des dépenses inutiles pour son transport, sa conservation et l'élimination ultérieure du liquide sur le lieu d'utilisation du sel.

On obtient généralement de bons résultats en mettant en oeuvre une quantité de liquide telle que le volume du liquide saturé en chlorure de sodium soit compris entre 15 et 50% du volume des particules, et plus spécialement entre 25 et 45% de ce volume.

Par exemple, dans le cas où le liquide mis en oeuvre est de l'eau et où les particules ont un diamètre n'excédant pas 100 µm, des quantités d'eau qui conviennent bien sont celles pour lesquelles la dispersion résultante contient un poids d'eau compris entre 15 et 35% du poids de la dispersion, de préférence entre 20 et 30% de ce poids.

La dispersion des particules dans le liquide peut être exécutée à chaud ou à froid. Il s'avère toutefois souhaitable de réaliser la dispersion à une température aussi voisine que possible de celle à laquelle le conditionnement est conservé, de manière à réduire davantage le risque d'une prise en masse.

L'enceinte peut être réalisée en n'importe quel matériau qui soit étanche à l'air et à l'humidité, qui soit insoluble dans le liquide, qui ne réagisse pas avec celui-ci ou le chlorure de sodium et qui présente une résistance mécanique suffisante.

Elle peut être par exemple en polychlorure de vinyle ou en polyéthylène et consister en un boîtier rigide ou un sac souple, scellé, par exemple soudé. De préférence, l'enceinte a une forme et des dimensions telles qu'elle soit entièrement remplie par le liquide contenant les particules. Elle peut avantageusement consister en un sac souple, scellé, mis sous vide après remplissage.

Au moment de l'utilisation du sel du conditionnement selon l'invention, il suffit d'ouvrir l'enceinte, d'en extraire le liquide contenant les particules de chlorure de sodium et, selon l'application envisagée, de le diluer davantage, de le concentrer ou d'évaporer la totalité du liquide.

Dans une forme de réalisation avantageuse du conditionnement selon l'invention, le liquide contient une substance antiagglutinante qui peut être toute substance antiagglutinante communément utilisée pour les particules de chlorure de sodium. On utilise toutefois, de préférence, une substance antiagglutinante qui est soluble dans le liquide. Par exemple, dans le cas où celui-ci est de l'eau, on peut avantageusement utiliser un ferrocyanure hydrosoluble, tel que du ferrocyanure de potassium ou de sodium.

Dans cette forme de réalisation de l'invention, la substance antiagglutinante a pour fonction de réduire davantage le risque d'une prise en masse des particules de sel, lorsque le conditionnement est soumis à des variations de température, principalement à une alternance d'échauffements et de refroidissements.

Toutes autres conditions étant égales, l'action inhibitrice de la substance antiagglutinante sur la prise en masse est d'autant plus prononcée que sa teneur est élevée. D'une manière générale, on obtient de bons résultats avec du ferrocyanure de métal alcalin en quantité réglée de 2 à 15 parties par million, par rapport au poids total de chlorure de sodium présent dans le conditionnement, des quantités comprises entre 5 et 10 parties par million s'avérant spécialement avantageuses.

Selon une autre forme de réalisation de l'invention, le liquide mis en oeuvre est sélectionné parmi ceux pour lesquels la solubilité du chlorure de sodium est faible, généralement inférieure à 1% en poids à 20°C, de préférence inférieure à 0,1% en poids. Cette forme de réalisation de l'invention s'est révélée être spécialement avantageuse dans le cas où le conditionnement subit des alternances répétées de hausses et de baisses de température pendant un stockage de longue durée, en ce sens qu'elle diminue l'incidence de ces alternances sur la croissance des cristaux de chlorure de sodium. Des exemples de liquides utilisables dans cette forme de réalisation de l'invention sont l'acétone et les alcools éthylique, butylique et isopropylique.

L'invention est applicable à du sel à l'état de particules de chlorure de sodium de n'importe quelles dimensions. Elle trouve une application spécialement adéquate pour des particules fines, dont le diamètre est inférieur à $100\,\mu m$, et plus spécialement pour des particules extra fines utilisées notamment en fromagerie et pour le salage du beurre, dont le diamètre est inférieur à $80\,\mu m$ et, de préférence, à $50\,\mu m$.

Selon l'invention, le sel mis en oeuvre peut être du sel non raffiné mais l'invention s'applique le plus avantageusement à du sel raffiné et plus particulièrement à du sel raffiné se trouvant sous la forme de cristaux réguliers.

L'invention est spécialement bien adaptée au conditionnement de sel destiné à l'industrie fromagère et aux techniques de salage du beurre, dans lequel le sel est à l'état de particules de chlorure de sodium présentant une distribution granulométrique définie par un diamètre moyen des particules inférieur à $50\,\mu m$, de préférence à $30\,\mu m$, et un écart type inférieur à $25\,\mu m$, de préférence n'excédant pas $15\,\mu m$, le diamètre moyen d et l'écart type $\sigma$ étant définis par les relations suivantes (G. Herdan «Small particule statistics» 2e édition, 1960, Butterworths, pages 10 et 11):

$$d = \frac{\Sigma\, n_i d_i}{\Sigma\, n_i}$$

et

$$\sigma = \sqrt{\frac{\Sigma\, n_i (d_i - d)^2}{\Sigma\, n_i}}$$

où $n_i$ désigne la fréquence (par exemple le poids) des particules de diamètre $d_i$.

Du sel spécialement adéquat pour le salage du beurre est celui pour lequel la distribution granulométrique des particules de chlorure de sodium est définie par un diamètre moyen des particules compris entre 15 et $35\,\mu m$, de préférence entre 20 et $28\,\mu m$, et un écart type compris entre 10 et $20\,\mu m$, de préférence n'excédant pas $15\,\mu m$, et dans lequel la substance antiagglutinante est du ferrocyanure de métal alcalin, par exemple de potassium, en quantité comprise entre 5 et 10 parties par million, par rapport au poids des particules de chlorure de sodium.

L'intérêt de l'invention va apparaître au cours de la description suivante de deux exemples d'application.

Pour l'exécution des essais décrits aux exemples qui vont suivre, on a préparé, de manière connue en soi, du sel raffiné par cristallisation au départ d'une saumure. Le sel recueilli a été séché, additionné de ferrocyanure de potassium, puis broyé et criblé pour obtenir des particules extra fines dont le diamètre était inférieur à $50\,\mu m$. La quantité de ferrocyanure de potassium additionnée a été égale à environ 10 parties par million, par rapport au poids total du sel.

Exemple 1 (conforme à l'invention)

Immédiatement après leur obtention, des particules de sel ont été dispersées dans une saumure saturée en chlorure de sodium, en quantité réglée pour que la dispersion résultante contienne environ 73% de chlorure de sodium et 27% d'eau. La dispersion a été homogénéisée par malaxage. La dispersion recueillie à l'issue du malaxage s'est présentée à l'état d'une pâte aqueuse que l'on a immédiatement enfermée dans un sac en polychlorure de vinyle scellé, de manière à l'isoler de l'atmosphère ambiante.

A l'issue de six semaines de conservation, les particules se sont avérées avoir conservé une coulabilité satisfaisante et une distribution granulométrique respectant les normes imposées pour le salage du beurre.

Exemple 2 (comparatif)

Parallèlement à l'essai de l'exemple 1, des particules extra fines, obtenues de la manière décrite plus haut,ont immédiatement été enfermées telles quelles dans un sac en polychlorure de vinyle que l'on a scellé.

A l'issue d'à peine trois semaines de conservation, dans des conditions identiques à celles mises en oeuvre pour le sac de l'exemple 1, il y avait prise en masse telle que la granulométrie ne respectait plus les normes imposées pour le salage du beurre et que la coulabilité avait disparu.

**Revendications**

1. Conditionnement de sel alimentaire comprenant une enceinte fermée, étanche à l'air et à l'humidité, contenant le sel à l'état de particules, caractérisé en ce que lesdites particules sont dispersées dans un liquide saturé en chlorure de sodium.

2. Conditionnement selon la revendication 1, caractérisé en ce que le sel présente une distribution granulométrique définie par un diamètre moyen des particules inférieur à $50\,\mu m$ et un écart type inférieur à $25\,\mu m$.

3. Conditionnement selon la revendication 1 ou 2, caractérisé en ce que le sel contient une substance antiagglutinante.

4. Conditionnement selon la revendication 3, caractérisé en ce que la substance antiagglutinante est soluble dans le liquide et présente dans celui-ci à raison de 2 à 15 parties par million par rapport au poids de sel.

5. Conditionnement selon la revendication 4, caractérisé en ce que la substance antiagglutinante est un ferrocyanure de métal alcalin.

6. Conditionnement selon l'une quelconque des revendications 1 à 5, caractérisé en ce que le volume du liquide est compris entre 25 et 45% du volume du sel.

7. Conditionnement selon l'une quelconque des revendications 1 à 6, caractérisé en ce que le liquide est de l'eau.

8. Conditionnement selon l'une quelconque des revendications 1 à 6, caractérisé en ce que le liquide est choisi parmi ceux pour lesquels la solubilité du chlorure de sodium n'excède pas 1% en poids, à 20°C.

9. Conditionnement selon l'une quelconque des revendications 1 à 8, caractérisée en ce que l'enceinte est un sac souple scellé, mis sous vide.

**Patentansprüche**

1. Verpacktes Speisesalz mit einem luft- und feuchtigkeitsdichten geschlossenen Behältnis, das das Salz im Partikelzustand enthält, dadurch gekennzeichnet, dass die Partikel in einer mit Natriumchlorid gesättigten Flüssigkeit dispergiert sind.

2. Verpacktes Speisesalz nach Anspruch 1, dadurch gekennzeichnet, dass das Salz eine Korngrössenverteilung besitzt, die durch einen mittleren Durchmesser der Partikel kleiner als $50\,\mu m$ und eine Toleranz kleiner als $25\,\mu m$ bestimmt ist.

3. Verpacktes Speisesalz nach Anspruch 1 oder 2, dadurch gekennzeichnet, dass das Salz eine einer Bindung entgegenwirkende Substanz enthält.

4. Verpacktes Speisesalz nach Anspruch 3, dadurch gekennzeichnet, dass die einer Bindung entgegenwirkende Substanz in der Flüssigkeit lösbar ist und in dieser im Verhältnis von 2 bis 15 Teilen je Million Gewichtsteile des Salzes enthalten ist.

5. Verpacktes Speisesalz nach Anspruch 4, dadurch gekennzeichnet, dass die einer Bindung entgegenwirkende Substanz ein Alkalimetallferrozyanid ist.

6. Verpacktes Speisesalz nach irgendeinem der Ansprüche 1 bis 5, dadurch gekennzeichnet, dass das Volumen der Flüssigkeit im Bereich zwischen 25 und 45% des Volumens des Salzes liegt.

7. Verpacktes Speisesalz nach irgendeinem der Ansprüche 1 bis 6, dadurch gekennzeichnet, dass die Flüssigkeit Wasser ist.

8. Verpacktes Speisesalz nach irgendeinem der Ansprüche 1 bis 6, dadurch gekennzeichnet, dass die Flüssigkeit ausgewählt ist unter denjenigen, für die die Lösbarkeit von Natriumchlorid 1 Gew-% bei 20°C nicht überschreitet.

9. Verpacktes Speisesalz nach irgendeinem der Ansprüche 1 bis 8, dadurch gekennzeichnet, dass das Behältnis ein verschlossener nachgiebiger Beutel ist, der unter Vakuum steht.

**Claims**

1. Packaging of food salt, comprising a closed, airtight and watertight enclosure containing the salt in the state of particles, characterised in that the said particles are dispersed in a liquid saturated with sodium chloride.

2. Packaging according to Claim 1, characterised in that the salt has a particle size defined by an average particle diameter of less than $50\,\mu m$ and a standard deviation of less than $25\,\mu m$.

3. Packaging according to Claim 1 or 2, characterised in that the salt contains an antiagglutinating substance.

4. Packaging according to Claim 3, characterised in that the antiagglutinating substance is soluble in the liquid and present in the latter in the proportion of 2 to 15 parts per million with respect to the weight of salt.

5. Packaging according to Claim 4, characterised in that the antiagglutinating substance is an alkali metal ferrrocyanide.

6. Packaging according to any one of Claims 1 to 5, characterised in that the volume of the liquid is between 25 and 45% of the volume of the salt.

7. Packaging according to any one of Claims 1 to 6, characterised in that the liquid is water.

8. Packaging according to any one of Claims 1 to 6, characterised in that the liquid is chosen from those for which the solubility of sodium chloride does not exceed 1% by weight at 20°C.

9. Packaging according to any one of Claims 1 to 8, characterised in that the enclosure is a sealed flexible bag, placed under vacuum.